# EUROPÄISCHE PATENTSCHRIFT

(11) **EP 0 880 628 B1**
(45) Veröffentlichungstag und Bekanntmachung des Hinweises auf die Patenterteilung: **15.05.2002**
(21) Anmeldenummer: 97904388.2
(22) Anmeldetag: 07.02.1997
(51) Int. Cl.: E04D 12/00, E04D 5/02, D04H 5/06

(54) **DIFFUSIONSOFFENE DACHUNTERSPANNBAHN UND VERFAHREN ZUM HERSTELLEN DERSELBEN**
ROOF-LINING MATERIAL ALLOWING DIFFUSION AND PRODUCTION METHOD THEREFOR
BANDE SOUS-JACENTE A POUVOIR DE DIFFUSION POUR TOITURE ET SON PROCEDE DE FABRICATION

(30) Priorität: 13.02.1996 DE 29602475 U; 12.10.1996 DE 19642252
(43) Veröffentlichungstag der Anmeldung: 02.12.1998
(73) Patentinhaber: Klöber, Johannes, 58256 Ennepetal (DE)
(72) Erfinder: Wirz, Peter, 53721 Siegburg (DE)
(74) Vertreter: Grundmann, Dirk, Dr.
(86) Internationale Anmeldenummer: EP9700548
(87) Internationale Veröffentlichungsnummer: WO9730244

(56) Entgegenhaltungen:
- EP-A- 0 169 308
- EP-A- 0 245 933
- EP-A- 0 570 215
- EP-A- 0 742 305
- DE-A- 2 356 720
- FR-A- 2 098 475

## Beschreibung

Die Erfindung betrifft eine diffusionsoffene Dachunterspannbahn, die hydrophob ist und/oder hydrophob ausgerüstet ist, enthaltend einen mindestens dreilagigen Verbund von Vliesschichten auf Basis von thermoplastischen Kunststoffen, wobei zumindest die äußeren Vliesschichten zumindest überwiegend aus Endlosfilamenten gebildet sind und zumindest eine innere Vliesschicht zumindest überwiegend aus schmelzgeblasenen Mikrofasern gebildet ist. Eine oder mehrere Vliesschichten können gegebenenfalls einzeln oder im Verbund durch Musterprägung verfestigt sein. Die Erfindung betrifft des weiteren ein Verfahren zur Herstellung einer Dachunterspannbahn.

Dachunterspannbahnen werden auf Dächern unterhalb der Ziegel oder anderer Deckbausteine ausgelegt, um einen zusätzlichen Schutz gegen Feuchtigkeit, Staub, Flugschnee und Wind zu bieten. Außerdem sollen sie eine hohe Festigkeit, insbesondere Reißfestigkeit aufweisen und möglichst wasserundurchlässig sowie schlagregendicht sein.

Bekannt sind beispielsweise Dachunterspannbahnen aus Kunststoffolien mit oder ohne Verstärkungseinlage.

Es ist auch eine Dachunterspannbahn aus einem Verbund von Vliesschichten auf Basis von Polypropylen bekannt, bei der die äußeren Vliesschichten aus Endlosfilamenten und eine innere Vliesschicht aus schmelzgeblasenen Mikrofasern gebildet sind, wobei der aus den Vliesschichten gefertigte Verbund hydrophobiert ist. Die so gebildete Dachunterspannbahn weist ein Flächengewicht von 160 g/m² auf.

Die äußeren Vliesschichten aus Endlosfilamenten bewirken eine hohe Reißfestigkeit, während die Vliesschicht aus schmelzgeblasenen Mikrofasern im Inneren des Verbundes einer guten Balance zwischen Wasserdichtigkeit und Wasserdampfoffenheit dient, so daß unter dem Dach gebildete Feuchtigkeit als Dampf durch die Dachunterspannbahn nach außen entweichen kann. Nachteilig bei dieser bekannten Dachunterspannbahn auf Basis von Vliesschichten ist eine zu geringe Wasserdichtigkeit, Schlagregendichtigkeit auf hartem Untergrund (zum Beispiel bei geschalten Dächern) und ein Zelteffekt, der auf eine zu große Kapillarleitfähigkeit für Wassertropfen zurückzuführen ist und ihre Empfindlichkeit gegenüber Imprägniermitteln, vor allem wasserlöslichen, wie sie zum chemischen Holzschutz der Dachkonstruktion eingesetzt werden.

Die Herstellung von Vliesschichten aus Endlosfilamenten ist beispielsweise in der US 4340 563 beschrieben. Die Herstellung von Vliesschichten aus schmelzgeblasenen Mikrofasern ist zum Beispiel aus der US 3978 185 bekannt. Die Herstellung von Verbunden aus verschiedenen Vliesschichten aus Fasern und/oder Filamenten aus thermoplastischen Kunststoffen für atmungsaktive und wasserundurchlässige oder wasseraufnahmefähige textile Anwendungen, wie Bekleidung, Wischtücher usw., ist beispielsweise aus der DE-PS 23 56 720 bekannt.

Weiterhin ist es zum Beispiel aus der EP 0245 933 bekannt, Dachunterspannbahnen mit einer stabilen Trägerbahn aus einem Polyester-Spinnvlies zu versehen, welche nachfolgend zur Erzielung von Wasserdichtigkeit bituminiert wird.
Aus der DE-OS 34 25 794 ist eine Dachunterspannbahn aus einer Polyurethanfolie bekannt, die mit einer Vliesschicht zum Beispiel aus Polyester belegt ist. In der Beschreibungseinleitung dieser Offenlegungsschrift wird eine Unterspannbahn erwähnt, die aus hochreißfestem Polyesterspinnvlies besteht und mit einer wasserabweisenden und atmungsaktiven Spezialbeschichtung in Form einer Paste versehen ist. Über den Aufbau der verwendeten Polyester-Vliesstoffe läßt sich dieser Veröffentlichung jedoch nichts entnehmen.

Die EP-PS 0027 750 beschreibt eine Trägerbahn für eine Dachunterspannbahn, die aus einem Faservlies aus Polypropylen, Polyethylen, Polyester oder Polyvinyl besteht und ein Flächengewicht zwischen 85 und 200 g/m² aufweist.

Aufgabe der Erfindung ist es, eine diffusionsoffene Dachunterspannbahn auf Basis von Vliesschichten derart weiterzubilden, daß sie die Nachteile des Standes der Technik überwindet.

Erfindungsgemäß wird diese Aufgabe mit einer diffusionsoffenen Dachunterspannbahn gemäß den kennzeichnenden Merkmalen des Patentanspruches 1 gelöst.

Vorteilhafte Ausgestaltungen der Erfindung sind den Unteransprüchen entnehmbar.

Das erfindungsgemäße Verfahren zur Herstellung der diffusionsoffenen Dachunterspannbahn ist Gegenstand der Ansprüche 26 bis 31.

Erfindungsgemäß wird eine diffusionsoffene Dachunterspannbahn vorgeschlagen, bei der die innere aus schmelzgeblasenen Mikrofasern gebildete Vliesschichthydrophob ausgerüstet ist und ein Flächengewicht von 10 bis 100 g/m², vorzugsweise 20 bis 60 g/m², aufweist und zumindest die Oberflächen der inneren Vliesschicht durch Wärmebehandlung filmartig mit Restporen ausgebildet sind, wobei Wasserdampfdurchlässigkeit gegeben ist.

Eine filmartige Ausbildung der Oberflächen der inneren Vliesschicht aus schmelzgeblasenen Mikrofasern mittels Wärmebehandlung kann beispielsweise dadurch erzeugt werden, daß die Oberflächen der Vliesschicht leicht angeschmolzen werden, wobei die angeschmolzenen Mikrofasern flächig verlaufen und einen filmartigen Zusammenhalt bilden, der jedoch keine geschlossene Oberfläche bildet, sondern sehr feine Poren, sogenannte Restporen beläßt. Durch die Wärmebehandlung werden die zwischen den Mikrofasern vorhandenen großen Poren durch das Anschmelzen der Mikrofasern und ihr flächiges Verlaufen verschlossen bzw. zu kleineren Restporen verkleinert.

Überraschend wurde festgestellt, daß durch diese filmartigen Oberflächen der inneren Vliesschicht aus schmelzgeblasenen Mikrofasern eine deutliche Verbesserung der Wasserdichtigkeit, Schlagregensicherheit und des Verhaltens gegen chemische Holzschutzmittel der erfindungsgemäßen Dachunterspannbahn auf Basis von Vliesschichten bewirkt wird. Der Zelteffekt durch Kapillarwirkung wird nahezu aufgehoben. Die auf der filmartigen Oberfläche der Vliesschicht aus schmelzgeblasenen Mikrofasern noch verbleibenden Restporen sind derartig klein, daß die Kapillarwirkung gegenüber Wassertropfen aufgehoben ist und hierbei die Wasserdampfdurchlässigkeit weiterhin erhalten ist.

Durch die zusätzliche hydrophobe Ausrüstung der inneren Vliesschicht aus schmelzgeblasenen Mikrofasern wird die Wasserdichtigkeit und Schlagregensicherheit weiter gesteigert. Unter Hydrophobieren wird die wasserabweisende Ausrüstung der Vliesschicht verstanden, wie sie aus der Textiltechnik bekannt ist.

Zur hydrophoben Ausrüstung der inneren Vliesschicht aus schmelzgeblasenen Mikrofasern sind beispielsweise Hydrophobiermittel auf Basis von Fluorkohlenstoffen, insbesondere perfluorierte Kohlenwasserstoffe geeignet, zum Beispiel Block-Copolymere eines Perfluoralkylacrylats, oder Fluorkohlenstoffe, die Trifluormethylsilylgruppen an Stelle der Perfluoralkylgruppen enthalten.

Weitere Möglichkeiten der Hydrophobierung von Vliesenund Verbundmaterialien sind zum Beispiel in der US 3837 996 beschrieben.

Die hydrophobierte innere Vliesschicht aus schmelzgeblasenen Mikrofasern wird zur Bildung der erfindungsgemäßen Dachunterspannbahn in einem mindestens dreilagigen Verbund ober- und unterseitig von je einer Vliesschicht aus Endlosfilamenten abgedeckt, wobei der Verbund beispielsweise durch Laminieren und/oder Kaschieren hergestellt wird. Dabei übernimmt die innere Vliesschicht aus schmelzgeblasenen Mikrofasern die Funktion einer wasserdichten, aber wasserdampfdurchlässigen Membran, die auf die bereits erläuterte geringe Porengröße in den zumindest filmartig aufgeschmolzenen Oberflächen zurückzuführen ist.

Die äußeren Vliesschichten aus Endlosfilamenten übernehmen eine Schutzfunktion für die innere Vliesschicht aus schmelzgeblasenen Mikrofasern gegen äußere Einwirkungen und verleihen der erfindungsgemäßen Dachunterspannbahn die gewünschten mechanischen Eigenschaften, wie Reißfestigkeit und Abriebfestigkeit.

Das Anschmelzen der Oberflächen der inneren Vliesschicht aus schmelzgeblasenen Mikrofasern durch Wärmeeinwirkung kann entweder während des Kaschierens und/oder unmittelbar vor dem Kaschieren mit den äußeren Vliesschichten zur Bildung der erfindungsgemäßen Dachunterspannbahn zum Beispiel mittels entsprechend angeordneter Wärmestrahler durchgeführt werden.

Erfindungsgemäß wird das Anschmelzen der Oberflächen der inneren Vliesschicht aus schmelzgeblasenen Mikrofasern unmittelbar vor dem Kaschieren bevorzugt und hierbei wird bei der erfindungsgemäßen Dachunterspannbahn eine überraschend feste Verbindung mit den äußeren Vliesschichten des Verbundes ermöglicht, die eine Anwendung von hohen Preßdrücken und Temperaturen beim Laminieren nicht erfordert. Auf diese Weise bleibt die gewünschte Wasserdampfdurchlässigkeit erhalten, da die Mikrofaserstruktur teilweise erhalten bleibt und Restporen auf den Oberflächen verbleiben. Dennoch wird die hohe Schlagregendichtigkeit durch die filmartigen Oberflächen erreicht und gleichzeitig ein sehr guter haftfester Verbund mit den Endlosfilamenten der äußeren Vliesschichten erreicht.

Des weiteren kann bei der erfindungsgemäßen Dachunterspannbahn auf eine kostenintensive hydrophobe Ausrüstung auch der äußeren Vliesschichten, d.h. des Verbundes, verzichtet werden, da allein die innere Vliesschicht aus schmelzgeblasenen Mikrofasern die wasserabweisenden Eigenschaften der erfindungsgemäßen Dachunterspannbahn durch entsprechende Ausrüstung in Verbindung mit den eben beschriebenen filmartigen Oberflächen zuverlässig gewährleistet.

Bevorzugt weisen die dem Baukörper zugewandte dachinnenseitige Vliesschicht aus Endlosfilamenten ein Flächengewicht von 17 bis 120 g/m², vorzugsweise 17 bis 80 g/m², und die dachaußenseitige Vliesschicht aus Endlosfilamenten ein Flächengewicht von 20 bis 120 g/m², vorzugsweise 50 bis 120 g/m², auf und die innere Vliesschicht aus schmelzgeblasenen Mikrofasern ein Flächengewicht von 10 bis 100 g/m², vorzugsweise 20 bis 60 g/m². Die Mikrofasern der schmelzgeblasenen Vliesschicht haben bevorzugt einen Durchmesser kleiner 10 µm.

In einer vorteilhaften Ausführungsform der Erfindung sind alle Schichten des Verbundes auf Basis von Polyolefinen, insbesondere Polypropylen gefertigt.

Der Aufbau des Verbundes aus Vliesschichten auf der Basis des gleichen Polyolefins, insbesondere Polypropylen, gestattet ein sortenreines Recycling der erfindungsgemäßen Dachunterspannbahn.

Besonders vorteilhaft kann die dem Baukörper zugewandte dachinnenseitige Vliesschicht aus Endlosfilamenten, die gegenüber der dachaußenseitigen Vliesschicht aus Endlosfilamenten das niedrigere Flächengewicht aufweist, mit einem Prägemuster versehen sein, wobei diese Vliesschicht während ihrer Herstellung bzw. vor dem Kaschieren mittels einer entsprechend ausgebildeten Prägewalze geprägt wird, wodurch sie einerseits zur Verbesserung ihrer mechanischen Eigenschaften verfestigt und die Oberfläche uneben und "rauh" gemacht wird. Überraschend wurde festgestellt, daß diese geprägte Oberfläche auf der Dachinnenseite der erfindungsgemäßen Dachunterspannbahn eine Tropfenbildung infolge Kondenswasser verhindert und so die Dampfdurchlässigkeit der inneren Vliesschicht aus schmelzgeblasenen Mikrofasern nicht durch Tropfenansammlungen auf der dachinnenseitigen Oberfläche der erfindungsgemäßen Dachunterspannbahn beeinträchtigt werden kann.

Die dachaußenseitige Vliesschicht aus Endlosfilamenten hingegen kann vorteilhaft zwischen glatten Walzen vor dem Kaschieren verfestigt sein, so daß kein Prägemuster aufgebracht wird, aber eine intensive Verbindung nahezu aller Überkreuzungsbereiche der sich überkreuzenden Endlosfilamente innerhalb der Vliesschicht erfolgt, wodurch diese Vliesschicht eine besonders hohe Reißfestigkeit aufweist, die sich in einer hohen Reißfestigkeit der erfindungsgemäßen Dachunterspannbahn niederschlägt.

Selbstverständlich ist es auch möglich, mehrere Vliesschichten oder den gesamten Verbund durch Musterprägung zu verfestigen.

In einer weiteren vorteilhaften Ausführungsform der Erfindung wird vorgeschlagen, daß zur weiteren Verbesserung der mechanischen Eigenschaften im Inneren des Verbundes, benachbart der inneren Vliesschicht aus schmelzgeblasenen Mikrofasern, eine zusätzliche Verstärkungseinlage, wie Gittergelege, Gewirke, Gewebe aus thermoplastischem Material vorgesehen ist, welche insbesondere die Reißfestigkeit der erfindungsgemäßen Dachunterspannbahn weiter steigert.

Da die Oberflächen der inneren Vliesschicht aus schmelzgeblasenen Mikrofasern beim Kaschieren unter Wärmeeinwirkung aufgeschmolzen werden, um die filmartigen Oberflächen zu bilden, wird die Verstärkungseinlage beim Kaschieren des Verbundes infolge des ausgeübten Drucks in das Mikrofaservlies eingedrückt, so daß eine feste Verbindung zwischen der Verstärkungseinlage und dem Mikrofaservlies entsteht und diese sich zu einer Einheit verbinden.

Ebenso bewirken die vor dem Kaschieren aufgeschmolzenen Oberflächen des Mikrofaservlieses eine feste Verbindung mit den äußeren Vliesschichten aus Endlosfilamenten, so daß die erfindungsgemäße Dachunterspannbahn einen besonders festen Schichtenverbund erhält.

Vorteilhaft sind dabei wiederum alle Schichten der erfindungsgemäßen Dachunterspannbahn einschließlich der Verstärkungseinlage auf der Basis von Polypropylen hergestellt, so daß ein sortenreines Recycling möglich ist. Darüber hinaus erhöht die zusätzliche Verstärkungseinlage im Inneren des Verbundes die Reißfestigkeit der erfindungsgemäßen Dachunterspannbahn derart, daß es ohne Verschlechterung der Gesamteigenschaften des Verbundes möglich ist, das Flächengewicht der dachaußenseitigen Vliesschicht aus Endlosfilamenten gegenüber der erstgenannten Ausführungsform der erfindungsgemäßen Dachunterspannbahn zu reduzieren. Vorgeschlagen wird, daß beide äußeren Schichten aus Endlosfilamenten ein Flächengewicht von 17 bis 60 g/m², die innere Vliesschicht aus schmelzgeblasenen Mikrofasern ein Flächengewicht von 10 bis 100 g/m², vorzugsweise 20 bis 120 g/m², und die Verstärkungseinlage ein Flächengewicht von 20 bis 60 g/m² aufweisen.

Zur weiteren Steigerung der Verbindungskräfte zwischen den einzelnen Vliesschichten kann darüber hinaus die Verstärkungseinlage mit einem Holtmelt-Kleber insbesondere auf Basis von Ethylenvinylacetat-Copolymeren (EVA) versehen werden, der beim Kaschieren des Verbundes infolge der dabei vorherrschenden Wärme ein Verkleben der äußeren Vliesschichten aus Endlosfilamenten und der inneren Vliesschicht aus schmelzgeblasenen Mikrofasern mit der Verstärkungseinlage bewirkt.

Die Verbindungskräfte zwischen den einzelnen Vliesschichten der erfindungsgemäßen Dachunterspannbahn können in einer weiteren Ausführungsform der Erfindung auch dadurch gesteigert werden, daß die innere Vliesschicht aus schmelzgeblasenen Mikrofasern auf der Basis von Polypropylen und Ethylenvinylacetat-Copolymeren ausgebildet ist, wobei 90 bis 99 Gew.-% Polypropylen und 1 bis 10 Gew.-% Ethylenvinylacetat-Copolymere vorgesehen sind. Auf diese Weise wird die bereits beschriebene innere Vliesschicht aus schmelzgeblasenen Mikrofasern so modifiziert, daß sie fast vollständig aus Polypropylen hergestellt ist und die entsprechenden Eigenschaften aufweist, jedoch darüber hinaus auch einen geringen Anteil des als Hot-Melt-Kleber wirksamen Ethylenvinylacetat-Copolymers gleichzeitig aufweist, und diese innere Vliesschicht während des Kaschierens unter Druck und Wärme selbsttätig mit den äußeren Vliesschichten nach Art eines Hot-Melt-Klebers verklebt und so die gewünschten hohen Verbindungskräfte zwischen den einzelnen Vliesschichten hergestellt werden.

In einer weiteren vorteilhaften Ausgestaltung der Erfindung ist die innere Vliesschicht aus schmelzgeblasenen Mikrofasern auf der Basis von Polyurethan hergestellt, wodurch bei geringen Flächengewichten besonders hohe Wasserdampfdurchlässigkeitswerte der erfindungsgemäßen diffusionsoffenen Dachunterspannbahn erreicht werden. Durch den filmähnlichen Charakter der Oberflächen der Polyurethan-Vliesschicht aus schmelzgeblasenen Mikrofasern infolge der Wärmeeinwirkung beim Kaschieren mit den äußeren Vliesschichten aus Endlosfasern wird eine gute Wasserdichtigkeit, Schlagregendichtigkeit und Beständigkeit gegen chemische Holzschutzmittel, vergleichbar einer Polyurethanfolie, erzielt, wobei der Zelteffekt nahezu ausgeschaltet ist.

Eine innere Vliesschicht aus schmelzgeblasenen thermoplastischen Polyurethanfasern kann mit Vliesen aus Endlosfilamenten aus thermoplastischen Kunststoffen, wie Polyolefinen, Polyestern, kombiniert werden.

Für die Herstellung der inneren Vliesschicht aus schmelzgeblasenen Polyurethan-Mikrofasern ist beispielsweise ein thermoplastisches Polyurethan geeignet. Dies weist vorteilhaft einen Schmelzpunktbereich von 90 bis 150°C nach DIN 53460, ein spezifisches Gewicht von 1,13 bis 1,25 g/cm² und eine Reißfestigkeit von mindestens 15 N/mm² auf.

Je nach Einsatzzweck können derartige thermoplastische Polyurethane mit speziellen Eigenschaften zum Einsatz kommen. So wird in einer Ausführungsform der Erfindung vorgeschlagen, ein thermoplastisches Polyurethan mit hohem Schmelzpunktbereich von 130 bis 150°C nach DIN 53460 und einer Shorehärte A von mindestens 75, vorzugsweise mindestens 80 nach DIN 53505 und einer Reißfestigkeit von mindestens 35 N/mm² zu verwenden. Derartige thermoplastische Polyurethane eignen sich durch ihren Schmelzpunktbereich und ihre hohe Reißfestigkeit für den Einsatz in thermisch höher belasteten Anwendungsbereichen und weisen eine höhere mechanische Festigkeit zum Beispiel im Hinblick auf ihre Reißfestigkeit auf.

In einer weiteren Ausführungsform wird auch vorgeschlagen, als thermoplastisches Polyurethan ein weitgehend lineares Polyesterurethan mit einem Schmelzviskositätsindex MVI (190°C, 10 kg) von 15 bis 23 cm³/10 min. und einem Erweichungsbereich von 60 bis 70°C nach Kofler zu verwenden. Derartige thermoplastische Polyurethane ermöglichen das Kaschieren des Verbundes bei niedrigeren Temperaturen, so daß der Verbund thermisch weniger belastet wird. Des weiteren weist eine aus diesem Polyurethan hergestellte Vliesschicht überdies leicht klebrige Oberflächen auf, die das Kaschieren des Verbundes erleichtern.

Vorteilhaft wird bei Ausbildung einer inneren Vliesschicht aus schmelzgeblasenen Polyurethan-Mikrofasern vorgeschlagen, die äußeren Vliesschichten aus Endlosfilamenten auf der Basis von Polyester herzustellen, wobei die Polyester-Endlosfilamente ein Flächengewicht von 30 bis 120 g/m² aufweisen und die innere Vliesschicht aus schmelzgeblasenen Mikrofasern auf Basis von Polyurethan ein Flächengewicht von 10 bis 80 g/m² aufweist. Dabei erbringen die obere und untere Polyester-Vliesschicht eine sehr gute mechanische Festigkeit und Abriebfestigkeit und weisen beispielsweise gegenüber Polypropylen eine bessere Witterungsbeständigkeit zum Beispiel gegen UV-Strahlen auf. Die maximale Zugfestigkeit der Vliesschicht aus Polyester-Endlosfilamenten liegt je nach Flächengewicht vorzugsweise bei mindestens etwa 100 bis 250 N/5 cm.

Auch diese Ausführungsform der erfindungsgemäßen Dachunterspannbahn kann wiederum mit einer Verstärkungseinlage, wie einem Gittergelege o.ä., im Inneren des Verbundes ausgerüstet sein, um die Reißfestigkeit und Stabilität der erfindungsgemäßen Dachunterspannbahn weiter zu steigern. Dieses Verstärkungsgittergelege kann beispielsweise aus Polyester gefertigt sein.

Darüber hinaus ist es im Sinne der Erfindung auch möglich, eine erfindungsgemäße diffusionsoffene Dachunterspannbahn zu bilden, die äußere Vliesschichten aus Polypropylen-Endlosfilamenten und eine innere Vliesschicht aus schmelzgeblasenen Polyurethan-Mikrofasern aufweist. Dabei beträgt das Flächengewicht der äußeren Vliesschichten aus Polypropylen-Endlosfilamenten vorteilhaft etwa 30 bis 120 g/m², während das Flächengewicht der inneren Vliesschicht aus schmelzgeblasenen Polyurethan-Mikrofasern etwa 10 bis 100 g/m² beträgt.

Zur Erfüllung der geltenden Vorschriften weist die erfindungsgemäße Dachunterspannbahn eine Reißfestigkeit von mindestens 150 N/5 cm auf.

Die beiden äußeren Vliesschichten aus Endlosfilamenten können mit gleichem Flächengewicht ausgewählt sein, was fertigungstechnisch vorteilhaft und wirtschaftlich ist und zu einem gleichmäßigen Aufbau der erfindungsgemäßen Dachbahn führt. Für diesen Fall kommen bevorzugt Flächengewichte der äußeren Vliesschichten von 50 bis 80 g/m² in Frage.

Für den Fall, daß unterschiedliche äußere Vliesschichten eingesetzt werden, weist die dachaußenseitige Vliesschicht bevorzugt ein höheres Flächengewicht zwischen 50 bis 120 g/m² und die dachinnenseitige Vliesschicht bevorzugt ein geringeres Flächengewicht von 17 bis 80 g/m² gegenüber der dachaußenseitigen Vliesschicht auf.

Die erfindungsgemäße Dachunterspannbahn kann gemäß einer weiteren vorteilhaften Ausführungsform hinsichtlich ihres Brandverhaltens so modifiziert sein, daß sie beispielsweise die Anforderungen der DIN 4102 B1 genügt. Dazu wird vorgeschlagen, daß mindestens eine der Vliesschichten des Verbundes oder auch der gesamte Verbund flammhemmend ausgerüstet ist. Als flammhemmende Ausrüstung schlägt die Erfindung eine geeignete Verbindung aus der Gruppe der Antimonoxide, Phosphorester, Zinkborate, Metalloxidhydrate oder Metallhydroxide, beispielsweise Aluminiumhydroxid, oder Kohlenstoffteilchen vor, wobei diese flammhemmende Ausrüstung oberflächig auf mindestens eine der Vliesschichten aufgebracht oder in den schmelzgeblasenen Mikrofasern bzw. den Endlosfilamenten mindestens einer der jeweiligen Vliesschichten enthalten ist. Bevorzugt sind Kohlenstoffteilchen, die zur besseren Handhabung mit einem thermoplastischen Kunststoff oder Hot-Melt-Kleber vermengt in Form von Partikeln oder Granulat eingesetzt werden. Hierbei sollte der Kleber 50 bis 75 Gew.-% Kohlenstoffteilchen als flammhemmendes Mittel enthalten. Als Kleber für die Kohlenstoffteilchen können beispielsweise Ethylenvinylacetat-Copolymere dienen. Ein solcher Kohlenstoffteilchen enthaltender Kleber wird als flammhemmende Ausrüstung in einer Menge von 30 bis 150 g/m², vorzugsweise 60 bis 120 g/m² in bezug auf den Verbund einer erfindungsgemäßen Dachunterspannbahn eingesetzt.

Vorteilhaft ist innerhalb des Verbundes die innere Vliesschicht aus schmelzgeblasenen Mikrofasern mit der eben beschriebenen flammhemmenden Ausrüstung mittels eines Kohlenstoffteilchen enthaltenden Klebers versehen, so daß nicht nur die flammhemmende Wirkung erzielt wird, sondern darüber hinaus die Ethylenvinylacetat-Copolymere, die auch als Hot-Melt-Kleber Verwendung finden, eine weitere Steigerung der Verbindungskräfte zwischen den einzelnen Vliesschichten des die erfindungsgemäße Dachunterspannbahn bildenden Verbundes bewirken.

Neben dieser Möglichkeit der Verwendung eines Klebers, enthaltend Kohlenstoffteilchen, als flammhemmende Ausrüstung ist es auch möglich, andere geeignete flammhemmende Ausrüstungen, zum Beispiel eine Mischung aus einem Ethylenvinylchloridacrylamid-Copolymerisat und einem Ammoniumpolyphosphat zu verwenden.

Das erfindungsgemäße Verfahren zur Herstellung einer diffusionsoffenen Dachunterspannbahn, die hydrophob ist und/oder hydrophob ausgerüstet ist, und einen mindestens dreilagigen Verbund von Vliesschichten auf Basis von thermoplastischen Kunststoff enthält, beruht darauf, daß zumindest die äußeren Vliesschichten überwiegend aus endlos hergestellten und zu einer Vliesbahn abgelegten Endlosfilamenten und zumindest eine innere Vliesschicht zumindest überwiegend aus schmelzgeblasenen und zu einer Vliesbahn abgelegten Mikrofasern nach dem Extrusionsverfahren hergestellt sind und die Vliesbahnen nachfolgend durch gemeinsames Hindurchführen durch einen Spalt mittels Kaschieren unter Einwirkung von Druck und Wärme zu dem Verbund verbunden werden, wobei eine oder mehrere Vliesschichten gegebenenfalls einzeln oder im Verbund durch Musterprägung verfestigt sind.

Zur Erzielung der bereits beschriebenen membranartigen wasserdichten bzw. wasserabweisenden, aber wasserdampfdurchlässigen Funktion der inneren Vliesschicht aus schmelzgeblasenen Mikrofasern schlägt die Erfindung vor, daß die Oberflächen der inneren Vliesschicht aus schmelzgeblasenen Mikrofasern mittels Wärmebehandlung angeschmolzen werden und in einem langgestreckten Spalt zwischen zwei umlaufenden Förderbändern mit den äußeren Vliesschichten verbunden werden, wobei beim Durchführen durch den Spalt Temperaturen oberhalb des Erweichungspunktes bis maximal zum Schmelzpunkt der schmelzgeblasenen Mikrofasern der inneren Vliesschicht und ein Druck von 5 bis 30 kN/cm³ während mindestens 10 sek. auf den Verbund einwirken, wobei die Mikrofasern der inneren Vliesschicht einen filmartigen Zusammenhalt bilden und filmartige Oberflächen mit gegenüber der ursprünglichen Porengröße wesentlich verkleinerten Restporen an der inneren Vliesschicht erhalten werden.

Durch das erfindungsgemäß zwischen zwei umlaufenden Förderbändern in einem langgestreckten Spalt erfolgende Kaschieren des Verbundes aus den einzelnen Vliesschichten, erfolgt das Einwirken von Temperatur und Druck gleichmäßig über einen längeren Zeitraum, nämlich so lange, wie der Verbund zum Hindurchlaufen durch den langgezogenen Spalt benötigt, beispielsweise 15 Sek.. Auf Grund dieses gleichmäßigen Einwirkens von Temperatur und Druck erfolgt das erfindungsgemäße gleichmäßige Anschmelzen der Oberflächen der inneren Vliesschicht, obwohl sie bereits im Inneren des Spaltes von den äußeren Vliesschichten abgedeckt ist. Dieses Anschmelzen der Oberflächen bewirkt einerseits die filmartige Gestalt der Oberflächen mit den wesentlich verkleinerten Restporen, die Wasserdichtheit bei gleichzeitiger Wasserdampfdurchlässigkeit gewährleisten und andererseits die bereits beschriebene feste Verbindung der äußeren Vliesschichten mit der inneren Vliesschicht.

Das Anschmelzen der Oberflächen der inneren Vliesschichten kann dem Kaschiervorgang vorausgehend bereits dadurch begonnen werden, daß mittels entsprechend angeordneter Wärmestrahler unmittelbar vor dem Kaschieren die Oberflächen der inneren Vliesschicht bereits angeschmolzen werden.

Die in der erfindungsgemäßen Dachunterspannbahn im Bereich der inneren Vliesschicht gegebenenfalls ausgebildeten Anteile eines Hot-Melt-Klebers bzw. der auf der Oberfläche des zusätzlich vorhandenen Verstärkungsgittergeleges ausgebildete Hot-Melt-Kleber werden durch die Wärmeeinwirkung, die zum Anschmelzen der Oberflächen der inneren Vliesschicht führt, ebenfalls angeschmolzen und somit aktiviert, so daß selbsttätig während des Kaschierens eine besonders feste Verbindung zwischen der inneren Vliesschicht und den äußeren Vliesschichten des die erfindungsgemäße Dachunterspannbahn bildenden Verbundes hergestellt wird.

In einer weiteren vorteilhaften Ausführungsform des erfindungsgemäßen Verfahrens wird vorgeschlagen, daß ein flammhemmendes Mittel bei der Herstellung der Endlosfilamente bzw. schmelzgeblasenen Mikrofasern deren Rohstoff beigegeben wird und flammhemmend ausgerüstete Endlosfilamente bzw. schmelzgeblasene Mikrofasern hergestellt und hieraus die äußeren bzw. innere Vliesschichten des Verbundes bildenden Vliesbahnen gebildet werden. Auf diese Weise wird bereits vor dem Kaschieren der einzelnen Vliesschichten zu dem die erfindungsgemäße Dachunterspannbahn bildenden Verbund eine flammhemmende Wirkung in die jeweiligen Fasern bzw. Filamente der einzelnen Vliesschichten impliziert, so daß im Gesamtergebnis ohne nachgeschaltete Maßnahme eine flammhemmend ausgerüstete Dachunterspannbahn erhalten wird.

Bevorzugt wird nur die innere Vliesschicht aus Meltblown-Microfasern flammhemmend ausgerüstet oder nur die beiden äußeren Vliesschichten.

In gleicher Weise ist es auch möglich, daß ein flammhemmendes Mittel auf mindestens eine der Vliesschichten des Verbundes vor dem Kaschieren aufgestreut wird. Sodann erfolgt durch das Kaschieren der einzelnen Vliesschichten die Einarbeitung der flammhemmenden Ausrüstung in den Verbund. Hierbei kann es von Vorteil sein, das flammhemmende Mittel jeweils nur zwischen zwei Vliesschichten einzubringen. Falls das flammhemmende Mittel einen geeigneten thermoplastischen Kunststoff oder Hot-Melt-Kleber enthält, kann auch der haftfeste Verbund zwischen den einzelnen Vliesschichten verbessert werden.

Als ein geeignetes flammhemmendes Mittel ist ein thermoplastischer oder Hot-Melt-Kleber, enthaltend Kohlenstoffteilchen, vorgesehen. Dabei bewirkt der thermoplastische oder Hot-Melt-Kleber einerseits die feste Einbindung der Kohlenstoffteilchen innerhalb des Vliesschichtenverbundes bzw. der einzelnen Endlosfilamente bzw. schmelzgeblasenen Mikrofasern und die Kohlenstoffteilchen können in bekannter Weise als flammhemmende Ausrüstung der erfindungsgemäßen Dachunterspannbahn dienen. Andererseits bewirkt der thermoplastische oder Hot-Melt-Kleber auch ein Verkleben der einzelnen Vliesschichten untereinander, weshalb die flammhemmende Ausrüstung mit Vorteil in die innere Vliesschicht aus schmelzgeblasenen Mikrofasern eingebracht wird und sodann ein Verkleben mit den äußeren Vliesschichten aus Endlosfilamenten bewirkt.

Als flammhemmende Ausrüstung kann ein geeigneter Kleber beispielsweise auf Basis von Ethylenvinylacetat-Copolymeren ausgebildet sein, der 50 bis 75 Gew.-% Kohlenstoff enthält.

Derartige thermoplastische oder Hot-Melt-Kleber, enthaltend Kohlenstoffteilchen, sind in Pulverform am Markt erhältlich und lassen sich leicht handhaben. Sie weisen üblicherweise eine Teilchengröße kleiner 800 µm auf.

Zur Erzielung einer ausreichenden flammhemmenden Wirkung wird vorgeschlagen, daß das flammhemmende Mittel in einer Menge von 30 bis 150 g/m², bevorzugt 60 bis 120 g/m² in bezug auf den Verbund aufgebracht wird.

Der erfindungsgemäße Verbund einer Dachunterspannbahn weist bevorzugt ein Gesamtflächengewicht von 140 bis 200 g/m² auf.

Die Erfindung wird nachfolgend anhand von Ausführungsbeispielen in der Zeichnung näher erläutert. Es zeigen
- Fig. 1a: eine Ausführungsform einer diffusionsoffenen Dachunterspannbahn
- Fig. 1b: eine weitere Ausführungsform einer Dachunterspannbahn
- Fig. 2: eine Anordnung zum Herstellen einer Dachunterspannbahn in schematisierter Darstellung
- Fig. 3: einen nicht maßstäblichen Schnitt durch eine Dachkonstruktion unter Verwendung einer Dachunterspannbahn.

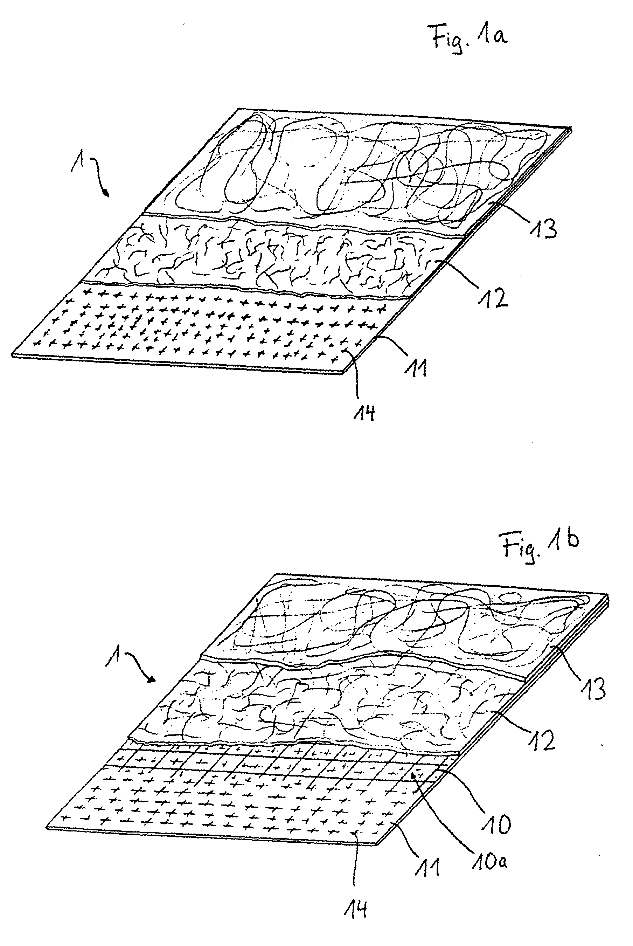

Gemäß der Fig. 1a besteht die Dachunterspannbahn 1 aus einem dreilagigen Verbund von Vliesschichten 11, 12, 13, wobei die äußeren Vliesschichten 11, 13 aus Endlosfilamenten gebildet sind und die innere Vliesschicht 12 aus schmelzgeblasenen Mikrofasern gebildet ist.

Dabei ist die auf der Dachinnenseite zur Auflage kommende Vliesschicht 11 aus Endlosfilamenten auf Basis von Polypropylen mit einem Flächengewicht von zum Beispiel 60 g/m² gebildet, wobei diese Vliesschicht mit einem Prägemuster 14 zur Verfestigung versehen ist. Beispielsweise besitzt diese Vliesschicht eine Reißfestigkeit von mindestens 20 N/5 cm. Weiterhin bewirkt dieses Prägemuster 14 eine rauhe Oberfläche der dachinnenseitigen Vliesschicht 11 aus Endlosfilamenten, so daß bei Aufliegen der Dachunterspannbahn 1 auf einem Baukörper der Bildung von Wassertropfen infolge Kondenswasser auf der Dachinnenseite vorgebeugt wird und die Wasserdampfdurchlässigkeit der Dachunterspannbahn 1 nicht durch Ansammlungen von Wassertropfen beeinträchtigt werden kann. Das Prägemuster 14 kann beispielsweise mittels einer entsprechend ausgebildeten Prägewalze vor dem Laminieren in die Vliesschicht 1 aus Endlosfilamenten eingebracht worden sein.

Auf diese dachinnenseitige Vliesschicht 11 ist eine Vliesschicht 12 aus schmelzgeblasenen Mikrofasern aufgebracht, die ebenfalls auf Basis von Polypropylen hergestellt ist und ein Flächengewicht von 40 g/m² aufweist.

Die Vliesschicht 12 aus schmelzgeblasenen Mikrofasern ist mit einem geeigneten handelsüblich erhältlichen Hydrophobiermittel auf Basis eines Fluorkohlenstoffes hydrophob ausgerüstet und die Oberflächen der Vliesschicht 12 aus schmelzgeblasenen Mikrofasern ist durch Wärmebehandlung filmartig ausgebildet. Diese filmartige Ausbildung der Oberflächen der inneren Vliesschicht 12 aus schmelzgeblasenen Mikrofasern wurde durch Anschmelzen der beiden Oberflächen unmittelbar vor und während des Verbindens mit den weiteren Vliesschichten erzeugt, wie nachfolgend noch näher erläutert wird. Die auf den filmartigen Oberflächen der Vliesschicht 12 aus schmelzgeblasenen Mikrofasern noch verbliebenen Poren sind dabei derartig klein, daß die Kapillarwirkung gegenüber Wassertropfen aufgehoben ist, so daß die Vliesschicht 12 aus schmelzgeblasenen Mikrofasern wasserdicht bzw. wasserabweisend ist, jedoch gegenüber Wasserdampf durchlässig ist. Gleichzeitig wird das Verhalten gegenüber chemischen Holzschutzmitteln wesentlich verbessert.

Auf die Vliesschicht 12 aus schmelzgeblasenen Mikrofasern ist wiederum eine Vliesschicht 13 aus Endlosfilamenten aufgebracht, wobei die Endlosfilamente wiederum auf Basis von Polypropylen gebildet sind und ein Flächengewicht von zum Beispiel 60 g/m² aufweisen. Die Vliesschicht 13 aus Endlosfilamenten, die die dachaußenseitige Vliesschicht der Dachunterspannbahn 1 bildet, wird vor dem Laminieren zwischen glatten Walzen verfestigt, so daß eine intensive Verbindung nahezu aller Überkreuzungsbereiche der sich überkreuzenden Endlosfilamente innerhalb der Vliesschicht 13 bewirkt wird und die Vliesschicht 13 eine besonders hohe Reißfestigkeit von beispielsweise etwa 200 N/5 cm und eine hohe Abriebfestigkeit aufweist.

Auf diese Weise ist die innere Vliesschicht 12 aus schmelzgeblasenen Mikrofasern beidseitig von Vliesschichten 11, 13 aus Endlosfilamenten abgedeckt. Der Verbund weist eine Reißfestigkeit von mindestens 120 N/5 cm auf. Es ist auch möglich, die dachaußenseitige Schicht 13 mit einem höheren Flächengewicht, zum Beispiel 100 g/m² oder 120 g/m², einzusetzen, um besonders gute mechanische Eigenschaften, wie hohe Reißfestigkeit und Abriebfestigkeit zu erhalten, währenddessen die innere Mikrofaserschicht 12 die Wasserdichtigkeit bei gleichzeitiger Wasserdampfdurchlässigkeit der Dachunterspannbahn 1 membranartig bewirkt. Zur weiteren Steigerung der Wasserdichtigkeit kann darüber hinaus die innere Vliesschicht 12 aus schmelzgeblasenen Mikrofasern mit einem geeigneten Hydrophobisierungsmittel wasserabweisend ausgerüstet sein. Die dachinnenseitige Vliesschicht 11 aus Endlosfilamenten.wird dann mit einem geringeren Flächengewicht, zum Beispiel 30 oder 20 g/m² ausgebildet.

Die innere Vliesschicht 12 aus schmelzgeblasenen Mikrofasern kann darüber hinaus durch eine entsprechende Ausrüstung flammhemmend ausgebildet sein. Dazu kann beispielsweise ein Kleber, enthaltend Kohlenstoffteilchen, die die flammhemmende Wirkung hervorrufen, vor der Herstellung der schmelzgeblasenen Mikrofasern in deren Rohstoff eingearbeitet worden sein, so daß die schmelzgeblasenen Mikrofasern auch Anteile des thermoplastischen oder Hot-Melt-Klebers zusammen mit den Kohlenstoffteilchen aufweisen und somit einerseits flammhemmend ausgerüstet sind, andererseits während des Kaschierens des Verbundes infolge der vorherrschenden Wärme mit den äußeren Vliesschichten 11, 13 verkleben und somit eine besonders feste Verbindung eingehen.

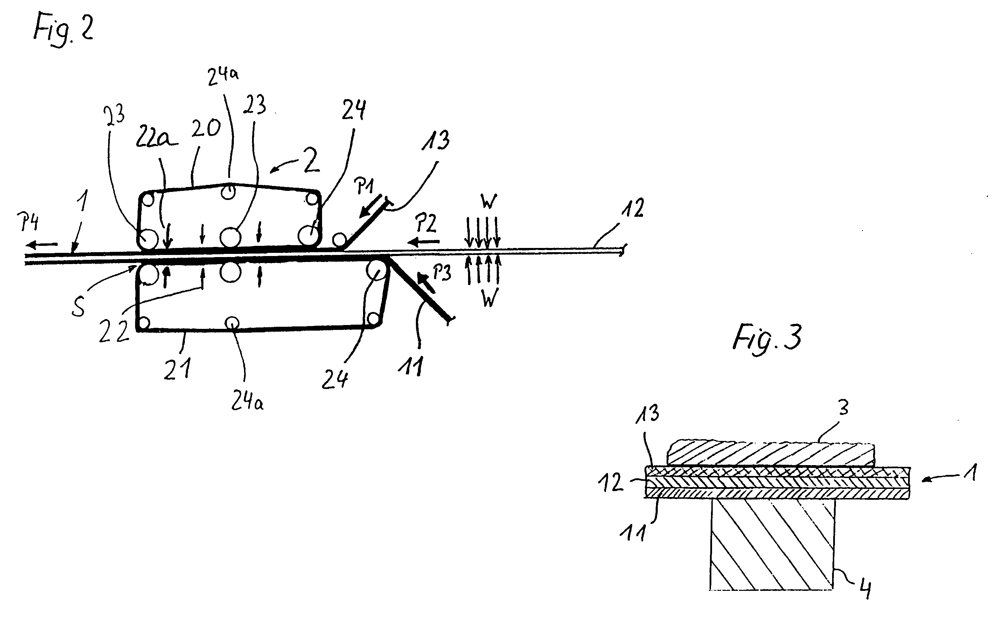

Die Herstellung dieses erfindungsgemäßen Verbundes für die Dachunterspannbahn 1 ist in der Fig. 2 schematisch dargestellt. Die einzelnen Vliesschichten 11, 12, 13 werden in nicht näher dargestellter Weise, beispielsweise auf Rollen bereitgestellt und in Pfeilrichtung P1, P2, P3 von den einzelnen Rollen abgewickelt und in eine Kaschiervorrichtung 2 eingezogen.

Die Kaschiervorrichtung 2 ist als sogenannte Flachbettkaschiervorrichtung ausgebildet und weist ein oberes Förderband 20 und ein unteres Förderband 21 auf, wobei die Förderbänder 20, 21 kontinuierlich über Umlenkwalzen 23, 24 mittels eines nicht näher dargestellten Antriebes umlaufen. Zwischen den beiden umlaufenden Förderbändern 20, 21 ist ein langgezogener Spalt S gebildet, in den die zu kaschierenden Vliesschichten eingeführt werden. Die umlaufenden Förderbänder 20, 21 der Kaschiervorrichtung 2 bewirken dabei den Durchzug der zu kaschierenden Schichten durch Kaschiervorrichtung 2.

Weiterhin weist die Kaschiervorrichtung 2 in ihrem Inneren Heizaggregate 22 auf, die durch die umlaufenden Förderbänder 20, 21 hindurch zum kaschieren auf die zwischen den umlaufenden Förderbändern 20, 21 durch die Kaschiervorrichtung 2 hindurchgezogenen Vliesschichten einwirken. Ausgangsseitig der Kaschiervorrichtung können auch im Inneren noch Kühlaggregate 22a angeordnet sein, um eine frühe Verfestigung des Verbundes zu bewirken. Um einen guten Temperaturdurchgang durch die umlaufenden Förderbänder 20, 21 zu gewährleisten, sind diese aus Teflon gefertigt bzw. mit einer Teflonschicht auf der Seite, die mit den zu kaschierenden Schichten'in Berührung kommt, ausgerüstet. Gleichzeitig wird durch die Teflonoberflächen auf den umlaufenden Förderbändern 20, 21 ein Anhaften der umlaufenden Förderbänder 20, 21 an den Vliesschichten verhindert.

Weiterhin sind im Inneren der Kaschiervorrichtung 2 Walzenpaare 23 vorgesehen, die auf die durch die Kaschiervorrichtung 2 durchgezogenen Vliesschichten einen ausreichenden Anpreßdruck zum Kaschieren bewirken können. In Verbindung mit den Heiz- und Kühlelementen 22 kann somit der zum Kaschieren erforderliche Druck und die erforderliche Wärme von der Kaschiervorrichtung 2 über die Länge des Spaltes S aufgebracht werden, während die Vliesschichten mittels der umlaufenden Förderbänder 20, 21 durch die Kaschiervorrichtung 2 durchgezogen werden.

Die innere Vliesschicht 12 wird unmittelbar vor ihrem Eintritt in die Kaschiervorrichtung 2 von einer nicht näher dargestellten Heizeinrichtung durch Wärmestrahlen W beidseitig an ihren Oberflächen bereits aufgeschmolzen. Unmittelbar danach wird sie in die Kaschiervorrichtung 2 eingezogen, wobei die äußeren Vliesschichten 11, 13 aus Endlosfilamenten auf die aufgeschmolzenen Oberflächen der Vliesschicht 12 aus schmelzgeblasenen Mikrofasern aufgelegt werden.

Bereits zu diesem Zeitpunkt wird durch die aufgeschmolzenen Oberflächen der Mikrofaservliesschicht 12 eine Verbindung mit den äußeren Vliesschichten 11, 13 aus Endlosfilamenten hergestellt. Während des weiteren Durchlaufs durch die Kaschiervorrichtung 2 werden die aufeinandergelegten Vliesschichten 11, 12, 13 von den mit Teflon beschichteten umlaufenden Förderbändern 20, 21 erfaßt und durch die Kaschiervorrichtung 2 hindurchgezogen. Durch die im Inneren der Kaschiervorrichtung 2 angeordneten Heizelemente 22 oberund unterseitig des dreilagigen Verbundes der Vliesschichten 11, 12, 13 wird die zum Kaschieren notwendige Wärme aufgebracht, während über die Andruckrollen 23 der zum Kaschieren notwendige Anpreßdruck auf den Verbund ausgeübt wird, so daß am Ausgang der Kaschiervorrichtung 2 die erfindungsgemäße Dachunterspannbahn 1 mit einem festen Verbund der einzelnen Vliesschichten 11, 12, 13 gebildet ist. Gleichzeitig bewirken die im Inneren des Spaltes vorherrschenden Temperaturen knapp unterhalb des Schmelzpunktes der schmelzgeblasenen Mikrofasern und der dort vorherrschende Druck von beispielsweise 25 kN/cm² während des Durchlaufs durch die Kaschiervorrichtung 2, der mindestens 10 Sek. dauert, die Ausbildung der filmartigen Oberflächen der inneren Vliesschicht, die bereits durch das eben beschriebene Anschmelzen mittels Wärmestrahlen W vor dem Kaschieren begonnen wurde. Somit weist die innere Vliesschicht 12 aus schmelzgeblasenen Mikrofasern die filmartig aufgeschmolzenen Oberflächen auf, wodurch die verbliebene Porengröße derart reduziert worden ist, daß Wasserundurchlässigkeit gegeben ist, während Wasserdampf nach wie vor durch die Dachunterspannbahn 1 hindurchtreten kann. Durch eine getrennte Regelung der oberund unterseitigen Temperaturen der Heiz- und Kühlelemente 22 können die erhaltenen Eigenschaften der Dachunterspannbahn optimiert werden.

Eine weitere Ausführungsform der Dachunterspannbahn 1 zeigt die Fig. 1b. Zusätzlich zu dem in der Fig. 1a beschriebenen Aufbau der Dachunterspannbahn 1 mit Vliesschicht 12 aus schmelzgeblasenen Mikrofasern im Inneren und Vliesschichten 11, 13 aus Endlosfilamenten auf den Außenseiten ist bei dem Ausführungsbeispiel gemäß Fig. 1b eine zusätzliche Verstärkungseinlage in Form eines Gittergeleges 10 zum Beispiel aus Polypropylen in das Innere des Verbundes eingebracht. Durch dieses Verstärkungsgittergelege 10 wird die mechanische Festigkeit der Dachunterspannbahn 1 nochmals deutlich erhöht, jedoch wird die Wasserdampfdurchlässigkeit der Vliesschicht 12 aus schmelzgeblasenen Mikrofasern infolge der Gitterlücken 10a nicht nennenswert beeinträchtigt.

Die Herstellung dieses vierlagigen Verbundes aus zwei äußeren Vliesschichten 11, 13 aus Endlosfilamenten, einem zusätzlichen Verstärkungsgittergelege 10 und einer Vliesschicht 12 aus schmelzgeblasenen Mikrofasern im Inneren des Verbundes erfolgt in analoger Weise zum bereits beschriebenen Beispiel gemäß der Fig. 2, wobei lediglich noch das zusätzliche Verstärkungsgitter 10 der Kaschiervorrichtung 2 in analoger Weise zugeführt wird. Durch das bereits beschriebene Anschmelzen der Oberflächen der inneren Vliesschicht 12 aus schmelzgeblasenen Mikrofasern wird das Verstärkungsgittergelege 10 beim Kaschieren in die Vliesschicht 12 eingedrückt und so eine feste Verbindung hergestellt. Zur weiteren Verbesserung der Haftung der einzelnen Vliesschichten 11, 12 und 13 mit dem Verstärkungsgittergelege 10 kann dieses auch mit einer zusätzlichen Schicht aus Hot-Melt-Kleber, beispielsweise EVA, versehen werden, so daß die einzelnen Schichten beim Kaschieren infolge der vorherrschenden Wärme miteinander verklebt werden.

Dieses Verkleben kann auch dadurch erreicht werden, daß die innere Vliesschicht 12 aus schmelzgeblasenen Mikrofasern auf Basis von beispielsweise 95 Gew.-% Polypropylen und 5 Gew.-% EVA gebildet ist, die ebenfalls ein Verkleben mit den äußeren Vliesschichten beim Kaschieren bewirkt.

In der Fig. 3 ist eine Anwendung der Dachunterspannbahn dargestellt. Die Dachunterspannbahn 1 ist hierbei auf Holzbalken 4 der Dachkonstruktion aufgelegt, so daß die dachinnenseitige geprägte Endlosfaservliesschicht 11 auf den Holzbalken 4 zur Auflage kommt und die dachaußenseitige Endlosfaservliesschicht 13 mittels Dachziegel 3 nach außen hin abgedeckt wird. Infolge der Wasserdichtigkeit der im Inneren der Dachunterspannbahn 1 angeordneten Mikrofaservliesschicht 12 wird somit eine erhöhte Wasserdichtigkeit zum Beispiel gegen Schlagregen erreicht, wobei gleichzeitig im Hausinneren anfallende Feuchtigkeit als Dampf durch die Dachunterspannbahn nach außen entweichen kann.

Die dachinnenseitige Vliesschicht 11 aus Endlosfilamenten schützt dabei die innere Vliesschicht 12 aus schmelzgeblasenen Mikrofasern vor Beschädigung und verhindert durch ihre rauhe Oberfläche die Ansammlung von Kondenswassertröpfchen, die die Wasserdampfdurchlässigkeit der Dachunterspannbahn 1 nach außen beinträchtigen würde.

Auf der Dachaußenseite ist die innere Vliesschicht 12 aus schmelzgeblasenen Mikrofasern ebenfalls von einer Vliesschicht 13 aus Endlosfilamenten abgedeckt und so gegen Beschädigung geschützt. Gleichzeitig bewirkt die Vliesschicht 13 durch ihre besonders hohe Reißfestigkeit und Abriebfestigkeit die gewünschten mechanischen Eigenschaften.

Zur Erzielung einer im Baubereich geforderten flammhemmenden Eigenschaft kann die Dachunterspannbahn mit einer flammhemmenden Ausrüstung, zum Beispiel mittels eines EVA-Copolymers, enthaltend Kohlenstoffteilchen, versehen sein und so zum Beispiel die Anforderungen der DIN 4102 B1 erfüllen.

## Patentansprüche

1. Diffusionsoffene Dachunterspannbahn, die hydrophob ist und/oder hydrophob ausgerüstet ist, enthaltend einen mindestens dreilagigen Verbund von Vliesschichten auf Basis von thermoplastischen Kunststoffen, wobei zumindest die äußeren Vliesschichten zumindest überwiegend aus Endlosfilamenten gebildet sind und zumindest eine innere Vliesschicht zumindest überwiegend aus schmelzgeblasenen Mikrofasern gebildet ist, **dadurch gekennzeichnet, daß** die innere aus schmelzgeblasenen Mikrofasern gebildete Vliesschicht (12) hydrophob ausgerüstet ist und ein Flächengewicht von 10 bis 100 g/m², vorzugsweise 20 bis 60 g/m², aufweist und die Oberflächen der inneren Vliesschicht durch Wärmebehandlung filmartig mit Restporen ausgebildet sind, wobei Wasserdampfdurchlässigkeit gegeben ist.

2. Dachunterspannbahn nach Anspruch 1,
**dadurch gekennzeichnet, daß** die dem Baukörper zugewandte dachinnenseitige Vliesschicht (11) aus Endlosfilamenten ein Flächengewicht von 17 bis 120 g/m² , vorzugsweise 17 bis 80 g/m² und die dachaußenseitige Vliesschicht (13) ein Flächengewicht von 20 bis 120 g/m², vorzugsweise.50 bis 120 g/m², aufweisen und die innere Vliesschicht (12) aus schmelzgeblasenen Mikrofasern ein Flächengewicht von 10 bis 100 g/m², vorzugsweise 20 bis 60 g/m² ,aufweist.

3. Dachunterspannbahn nach Anspruch 1 oder 2,
**dadurch gekennzeichnet, daß** alle Vliesschichten des Verbundes auf Basis von Polyolefinen, insbesondere Polypropylen, gefertigt sind.

4. Dachunterspannbahn nach Anspruch 1 oder 2,
**dadurch gekennzeichnet, daß** die innere Vliesschicht aus schmelzgeblasenen Mikrofasern auf der Basis von thermoplastischem Polyurethan mit einem Schmelzpunktbereich von 90 bis 150°C nach DIN 53460, einem spezifischen Gewicht von 1,13 bis 1,25 g/cm³ und einer Reißfestigkeit von mindestens 15 N/mm² ausgebildet ist.

5. Dachunterspannbahn nach Anspruch 4,
**dadurch gekennzeichnet, daß** das thermoplastische Polyurethan einen Schmelzpunktbereich von 130 bis 150°C nach DIN 53460 und eine Shorehärte A von mindestens 75, vorzugsweise mindestens 80, nach DIN 53505 aufweist und eine Reißfestigkeit von mindestens von 35 N/mm² aufweist.

6. Dachunterspannbahn nach Anspruch 4,
**dadurch gekennzeichnet, daß** als thermoplastisches Polyurethan ein weitgehend lineares Polyesterurethan mit einem Schmelzviskositätindex MVI (190°C, 10 kg) von 15 bis 23 cm³/10 min. und einem Erweichungsbereich von 60 bis 70°C nach Kofler verwendet ist.

7. Dachunterspannbahn nach einem der Ansprüche 4 bis 6,
**dadurch gekennzeichnet, daß** die äußeren Vliesschichten (11,13) aus Polyester-Endlosfilamenten mit einem Flächengewicht von 30 bis 120 g/m² und die innere Vliesschicht aus schmelzgeblasenen Mikrofasern auf der Basis von thermoplastischem Polyurethan mit einem Flächengewicht von 10 bis 80 g/m² ausgebildet sind.

8. Dachunterspannbahn nach einem der Ansprüche 1, 2, 4 bis 6,
**dadurch gekennzeichnet; daß** die äußeren Vliesschichten (11, 13) aus Polypropylen-Endlosfilamenten und die innere Vliesschicht aus schmelzgeblasenen Polyurethan-Mikrofasern ausgebildet sind.

9. Dachunterspannbahn nach Anspruch 2,
**dadurch gekennzeichnet, daß** die Vliesschicht (11) auf der Dachinnenseite ein geringeres Flächengewicht als die Vliesschicht (13) auf der Dachaußenseite aufweist.

10. Dachunterspannbahn nach einem der Ansprüche 1 bis 9,
**dadurch gekennzeichnet, daß** im Inneren des Verbundes (1) eine zusätzliche Verstärkungseinlage, wie Gittergelege, Gewirke, Gewebe aus thermoplastischen Material vorgesehen ist, das einer Seite der inneren Vliesschicht (12) aus schmelzgeblasenen Mikrofasern benachbart ist.

11. Dachunterspannbahn nach Anspruch 1,
**dadurch gekennzeichnet, daß** benachbart zur inneren Vliesschicht (12) aus schmelzgeblasenen Mikrofasern eine Verstärkungseinlage, wie Gittergelege, Gewirke, Gewebe auf Basis von Polypropylen als innere Schicht des Verbundes (1) ausgebildet ist.

12. Dachunterspannbahn nach Anspruch 7,
**dadurch gekennzeichnet, daß** benachbart zur inneren Vliesschicht (12) aus schmelzgeblasenen Mikrofasern eine Verstärkungseinlage, wie Gittergelege, Gewirke, Gewebe auf Basis von Polyester als innere Schicht des Verbundes (1) ausgebildet ist.

13. Dachunterspannbahn nach Anspruch 11,
**dadurch gekennzeichnet, daß** die Verstärkungseinlage mit einem Hot-Melt-Kleber, insbesondere einem Ethylenvinylacetat-Copolymer, versehen ist.

14. Dachunterspannbahn nach einem der Ansprüche 1 bis 13,
**dadurch gekennzeichnet, daß** die dachinnenseitige Vliesschicht (11) aus Endlosfilamenten auf der Dachinnenseite mit einem Prägemuster (14) versehen ist.

15. Dachunterspannbahn nach einem der Ansprüche 1 bis 14,
**dadurch gekennzeichnet, daß** die dachaußenseitige Vliesschicht (13) aus Endlosfilamenten flächig infolge Durchlaufens durch einen Walzenspalt, gebildet von glatten Walzen, verfestigt ist.

16. Dachunterspannbahn nach einem der Ansprüche 1,2,3, 11 oder 13, **dadurch gekennzeichnet, daß** alle Schichten des Verbundes auf Basis von Polypropylen aufgebaut sind und die innere Schicht aus der Verstärkungseinlage ein Flächengewicht von 20 bis 120 g/m² aufweist.

17. Dachunterspannbahn nach einem der Ansprüche 1 bis 16,
**dadurch gekennzeichnet, daß** der Verbund hohe Schlagregendichtigkeit und hohe Wasserundurchlässigkeit aufweist.

18. Dachunterspannbahn nach einem der Ansprüche 1 bis 17,
**dadurch gekennzeichnet, daß** die innere Vliesschicht (12) aus schmelzgeblasenen Mikrofasern mittels Hydrophobiermitteln auf Basis von Fluorkohlenstoffen, wie Block-Copolymere eines Perfluoralkylacrylats oder Fluorkohlenstoffen, die Trifluormethylsilylgruppen an Stelle der Perfluoralkylgruppen enthalten, hydrophob ausgerüstet ist.

19. Dachunterspannbahn nach einem der Ansprüche 1 bis 18,
**dadurch gekennzeichnet, daß** sie eine Reißfestigkeit von mindestens 120 N/5 cm, vorzugsweise 150 n/5 cm, aufweist.

20. Dachunterspannbahn nach Anspruch 1,
**dadurch gekennzeichnet, daß** die innere Vliesschicht (12) aus schmelzgeblasenen Mikrofasern auf der Basis von Polypropylen und Ethylenvinylacetat-Copolymeren ausgebildet ist, wobei 90 bis 99 Gew.-% Polypropylen und 1 bis 10 Gew.-% Ethylenvinylacetat-Copolymere vorgesehen sind.

21. Dachunterspannbahn nach einem der Ansprüche 1 bis 20,
**dadurch gekennzeichnet, daß** mindestens eine der Vliesschichten (11, 12, 13) des Verbundes flammhemmend ausgerüstet ist.

22. Dachunterspannbahn nach Anspruch 21,
**dadurch gekennzeichnet, daß** als flammhemmende Ausrüstung ein thermoplastischer Kunststoff oder Hot-Melt-Kleber, enthaltend Kohlenstoffteilchen, vorgesehen ist und die flammhemmende Ausrüstung oberflächlich auf mindestens eine Vliesschicht aufgebracht oder in den schmelzgeblasenen Mikrofasern bzw. den Endlosfilamenten der jeweiligen Vliesschicht enthalten ist.

23. Dachunterspannbahn nach Anspruch 22,
**dadurch gekennzeichnet, daß** als Kleber für die Kohlenstoffteilchen Ethylenvinylacetat-Copolymere eingesetzt sind.

24. Dachunterspannbahn nach einem der Ansprüche 21 oder 22,
**dadurch gekennzeichnet, daß** die innere Vliesschicht (12) flammhemmend ausgerüstet ist.

25. Dachunterspannbahn nach einem der Ansprüche 21 bis 24,
**dadurch gekennzeichnet, daß** der die Kohlenstoffteilchen enthaltende Kleber in einer Menge von 30 bis 150 g/m², vorzugsweise 60 bis 120 g/m² in bezug auf den Verbund eingesetzt ist.

26. Verfahren zur Herstellung einer diffusionsoffenen Dachunterspannbahn, die hydrophob ist und/oder hydrophob ausgerüstet ist und einen mindestens dreilagigen Verbund von Vliesschichten auf Basis von thermoplastischen Kunststoffen enthält, wobei zumindest die äußeren Vliesschichten überwiegend aus endlos hergestellten und zu einer Vliesbahn abgelegten Endlosfilamenten und zumindest eine innere Vliesschicht zumindest überwiegend aus schmelzgelasenen und zu einer Vliesbahn abgelegten Mikrofasern nach dem Extrusionsverfahren hergestellt sind und die Vliesbahnen nachfolgend durch gemeinsames Hindurchführen durch einen Spalt mittels Kaschieren unter Einwirken von Druck und Wärme zu dem Verbund verbunden werden, wobei eine oder mehrere Vliesschichten gegebenenfalls einzeln oder im Verbund durch Musterprägung verfestigt sind nach einem der Ansprüche 1 bis 25, **dadurch gekennzeichnet, daß** zumindest die Oberflächen der inneren Vliesschicht aus schmelzgeblasenen Mikrofasern mittels Wärmebehandlung vor dem Kaschieren angeschmolzen werden und in einem langgestreckten Spalt zwischen zwei umlaufenden Förderbändern mit den äußeren Vliesschichten verbunden werden, wobei beim Durchführen durch den Spalt Temperaturen oberhalb des Erweichungspunktes bis maximal zum Schmelzpunkt der schmelzgeblasenen Mikrofasern der inneren Vliesschicht und ein Druck von 5 bis 30 kN/cm² während mindestens 10 Sek. auf den Verbund einwirken, wobei die Mikrofasern der inneren Vliesschicht einen filmartigen Zusammenhalt bilden und filmartige Oberflächen mit gegenüber der ursprünglichen Porengröße wesentlich verkleinerten Restporen an der inneren Vliesschicht erhalten werden.

27. Verfahren nach Anspruch 26,
**dadurch gekennzeichnet, daß** ein flammhemmendes Mittel vor der Herstellung der Endlosfilamente und/oder schmelzgeblasenen Mikrofasern deren Rohstoff beigegeben wird und flammhemmend ausgerüstete Endlosfilamente und/oder schmelzgeblasene Mikrofasern zu den die äußeren bzw. innere Vliesschichten des Verbundes bildenden Vliesbahnen abgelegt und nachfolgend zu dem Verbund kaschiert werden.

28. Verfahren nach Anspruch 26,
**dadurch gekennzeichnet, daß** ein flammhemmendes Mittel auf mindestens eine der Vliesschichten des Verbundes vor dem Kaschieren aufgestreut wird.

29. Verfahren nach einem der Ansprüche 27 oder 28,
**dadurch gekennzeichnet, daß** als flammhemmendes Mittel ein thermoplastischer Kunststoff oder Hot-Melt-Kleber, enthaltend Kohlenstoffteilchen vorgesehen ist.

30. Verfahren nach Anspruch 29,
**dadurch gekennzeichnet, daß** als flammhemmendes Mittel ein Kleber auf Basis von Ethylen-Vinylacetat-Copolymeren, enthaltend 50 bis 75 Gew.-% Kohlenstoff vorgesehen ist.

31. Verfahren nach einem der Ansprüche 29 und 30,
**dadurch gekennzeichnet, daß** das flammhemmende Mittel in einer Menge von 30 bis 150 g/m², bevorzugt 60 bis 120 g/m², in bezug auf den Verbund aufgebracht wird.

## Claims

1. Breathable roofing underlayment which is hydrophobic and/or has been rendered hydrophobic, containing an at least three-ply composite of non-woven layers based on thermoplastics, at least the outer non-woven layers being formed at least predominantly of continuous filaments and at least one inner non-woven layer being formed at least predominantly of meltblown microfibres, **characterized in that** the inner non-woven layer (12) which is formed of meltblown microfibres, has been rendered hydrophobic and has a basis weight of 10 to 100 g/m² and preferably of 20 to 60 g/m² and the surfaces of the inner non-woven layer have been heat treated to be filmlike with remaining pores to provide water vapour perviousness.

2. Roofing underlayment according to Claim 1, **characterized in that** the roof-inner-side non-woven layer (11) of continuous filaments, which faces the building structure, has a basis weight of 17 to 120 g/m² and preferably 17 to 80 g/m², the roof-outer-side non-woven layer (13) has a basis weight of 20 to 120 g/m² and preferably 50 to 120 g/m², and the inner non-woven layer (12) of meltblown microfibres has a basis weight of 10 to 100 g/m² and preferably 20 to 60 g/m².

3. Roofing underlayment according to Claim 1 or 2, **characterized in that** all non-woven layers of the composite are based on polyolefins, especially polypropylene.

4. Roofing underlayment according to Claim 1 or 2, **characterized in that** the inner non-woven layer of meltblown microfibres is based on thermoplastic polyurethane having a DIN 53460 melting point range of 90 to 150°C, a specific density of 1.13 to 1.25 g/cm³ and a breaking strength of at least 15 N/mm².

5. Roofing underlayment according to Claim 4, **characterized in that** the thermoplastic polyurethane has a DIN 53460 melting point range of 130 to 150°C and a DIN 53505 Shore A hardness of at least 75 and preferably at least 80 and has a breaking strength of at least 35 N/mm².

6. Roofing underlayment according to Claim 4, **characterized in that** the thermoplastic polyurethane used is a substantially linear polyester urethane having a melt viscosity index MVI (190°C, 10 kg) of 15 to 23 cm³/10 min and a Kofler softening range of 60 to 70°C.

7. Roofing underlayment according to any of Claims 4 to 6, **characterized in that** the outer non-woven layers (11, 13) are formed of continuous polyester filaments and have a basis weight of 30 to 120 g/m² and the inner non-woven layer of meltblown microfibres based on thermoplastic polyurethane has a basis weight of 10 to 80 g/m².

8. Roofing underlayment according to any of Claims 1, 2, 4 to 6, **characterized in that** the outer non-woven layers (11, 13) are formed of continuous polypropylene filaments and the inner non-woven layer is formed of meltblown polyurethane microfibres.

9. Roofing underlayment according to Claim 2, **characterized in that** the non-woven layer (11) on the roof-inner side has a lower basis weight than the non-woven layer (13) on the roof-outer side.

10. Roofing underlayment according to any of Claims 1 to 9, **characterized in that** the composite (1) has on its inside an additional reinforcing layer, such as a nonwoven scrim, loop-formingly knitted or woven fabric in a thermoplastic material adjacent to one side of the inner non-woven layer (12) of meltblown microfibres.

11. Roofing underlayment according to Claim 1, **characterized in that** adjacent to the inner non-woven layer (12) of meltblown microfibres there is a reinforcing ply, such as a nonwoven scrim, loop-formingly knitted or woven fabric based on polypropylene, as an inner layer of the composite (1).

12. Roofing underlayment according to Claim 7, **characterized in that** adjacent to the inner non-woven layer (12) of meltblown microfibres there is a reinforcing layer such as a nonwoven scrim, loop-formingly knitted or woven fabric based on polyester as an inner layer of the composite (1).

13. Roofing underlayment according to Claim 11, **characterized in that** the reinforcing layer has been provided with a hotmelt adhesive, especially an ethylene-vinyl acetate copolymer.

14. Roofing underlayment according to any of Claims 1 to 13, **characterized in that** the roof-inner-side non-woven layer (11) of continuous filaments has been provided with an embossed pattern (14) on the roof-inner side.

15. Roofing underlayment according to any of Claims 1 to 14, **characterized in that** the roof-outer-side non-woven layer (13) of continuous filaments has been consolidated into a sheetlike structure by passage through a roll nip formed by smooth rolls.

16. Roofing underlayment according to any of Claims 1, 2, 3, 11 or 13, **characterized in that** all layers of the composite are based on polypropylene and the inner, reinforcing layer has a basis weight of 20 to 120 g/m².

17. Roofing underlayment according to any of Claims 1 to 16, **characterized in that** the composite is substantially impervious to water, including driving rain.

18. Roofing underlayment according to any of Claims 1 to 17, **characterized in that** the inner non-woven layer (12) of meltblown microfibres has been rendered hydrophobic using hydrobicizing agents based on fluorocarbons, such as block copolymers of a perfluoroalkyl acrylate or fluorocarbons containing trifluoromethylsilyl groups instead of perfluoroalkyl groups.

19. Roofing underlayment according to any of Claims 1 to 18, **characterized in that** it has a breaking strength of at least 120 N/5 cm and preferably of 150 n/5 cm.

20. Roofing underlayment according to Claim 1, **characterized in that** the inner non-woven layer (12) of meltblown microfibres is based on polypropylene and ethylene-vinyl acetate copolymers, the polypropylene fraction ranging from 90 to 99% by weight and the ethylene-vinyl acetate copolymer fraction ranging from 1 to 10% by weight.

21. Roofing underlayment according to any of Claims 1 to 20, **characterized in that** at least one of the non-woven layers (11, 12, 13) of the composite has been provided with a flame-retardant finish.

22. Roofing underlayment according to Claim 21, **characterized in that** the flame-retardant finish is a thermoplastic material or a hotmelt adhesive containing carbon particles and the flame-retardant finish has been applied surficially to at least one non-woven layer or incorporated in the meltblown microfibres or the continuous filaments of the particular non-woven layer.

23. Roofing underlayment according to Claim 22, **characterized in that** the adhesives used for the carbon particles are ethylene-vinyl acetate copolymers.

24. Roofing underlayment according to either of Claims 21 and 22, **characterized in that** the inner non-woven layer (12) has been provided with a flame-retardant finish.

25. Roofing underlayment according to any of Claims 21 to 24, **characterized in that** the adhesive containing the carbon particles has been used in an amount of 30 to 150 g/m² and preferably 60 to 120 g/m², based on the composite.

26. A process for producing a breathable roofing underlayment which is hydrophobic and/or has been rendered hydrophobic and contains an at least three-ply composite of non-woven layers based on thermoplastics, at least the outer non-woven layers being formed by the extrusion process predominantly of continuous filaments produced as such and laid down to form a web and at least one inner web layer being formed by the extrusion process at least predominantly of meltblown microfibres laid down to form a web and the webs being subsequently joined together by conjoint passage through a nip by lamination under pressure and heat to form the composite, one or more non-woven layers having been optionally individually or in the composite consolidated by pattern embossing, according to any of Claims 1 to 25, **characterized in that** at least the surfaces of the inner non-woven layer of meltblown microfibres are incipiently melted by heat treatment prior to lamination and are joined together with the outer non-woven layers in an elongate nip between two endless travelling belts, the composite passing through the nip being exposed to temperatures from above the softening point to not more than the melting point of the meltblown microfibres of the inner non-woven layer and to a pressure of 5 to 30 kN/cm² for at least 10 sec, the microfibres of the inner non-woven layer forming a filmlike bond and filmlike surfaces having residual pores substantially reduced in size compared with the original pore size being obtained on the inner non-woven layer.

27. A process according to Claim 26, **characterized in that** a flame retardant is added before the production of the continuous filaments and/or meltblown microfibres to the raw material thereof and flame-retardant continuous filaments and/or meltblown microfibres are laid down to the webs forming respectively the outer and inner non-woven layers of the composite and subsequently laminated to form the composite.

28. A process according to Claim 26, **characterized in that** a flame retardant is sprinkled onto at least one of the non-woven layers of the composite prior to lamination.

29. A process according to either of Claims 27 and 28, **characterized in that** the flame retardant provided is a thermoplastic or hotmelt adhesive containing carbon particles.

30. A process according to Claim 29, **characterized in that** the flame retardant provided is an adhesive based on ethylene-vinyl acetate copolymers containing 50 to 75% by weight of carbon.

31. A process according to either of Claims 29 and 30, **characterized in that** the flame retardant is applied in an amount of 30 to 150 g/m² and preferably 60 to 120 g/m², based on the composite.

## Revendications

1. Couche sous-jacente de toiture perméable par diffusion, qui est hydrophobe et/ou rendue hydrophobe, comportant un stratifié à au moins trois couches de nappes non tissées à base de polymères thermoplastiques, dans lequel au moins les nappes non tissées extérieures sont constituées du moins principalement de filaments continus et au moins une nappe intérieure est constituée du moins principalement de microfibres soufflées à l'état fondu, **caractérisée en ce que** la nappe non tissée (12) en microfibres soufflées à l'état fondu est rendue hydrophobe et présente un poids superficiel de 10 à 100 g/m², de préférence 20 à 60 g/m², et **en ce que** les surfaces extérieures de la nappe intérieure est rendue pelliculaire avec une porosité résiduelle par un traitement thermique, la couche étant perméable à la vapeur d'eau.

2. Couche sous-jacente de toiture selon la revendication 1, **caractérisée en ce que** la nappe non tissée (11) intérieure du toit faisant face à la construction composée de filaments continus présente un poids superficiel de 17 à 120 g/m², de préférence 17 à 80 g/m², et que la nappe non tissée (13) du côté de l'extérieur du toit présente un poids superficiel de 20 à 120 g/m², de préférence 50 à 120 g/m², et que la nappe non tissée (12) intérieure en microfibres soufflées à l'état fondu présente un poids superficiel de 10 à 100 g/m², de préférence 20 à 60 g/m².

3. Couche sous-jacente de toiture selon la revendication 1 ou 2, **caractérisée en ce que** toutes les nappes non tissées du stratifié sont réalisées à base de polyoléfines, en particulier de polypropylène.

4. Couche sous-jacente de toiture selon la revendication 1 ou 2, **caractérisée en ce que** la nappe non tissée intérieure est réalisée en microfibres soufflées à l'état fondu à base de polyuréthane thermoplastique présentant un domaine de point de fusion de 90 à 150° C selon DIN 53460, une masse volumique de 1,13 à 1,25 g/cm³ et une résistance à la traction d'au moins 15 N/mm².

5. Couche sous-jacente de toiture selon la revendication 4, **caractérisée en ce que** le polyuréthane thermoplastique présente un domaine de points de fusion de 130 à 150° C selon DIN 53460 et une dureté shore A d'au moins 75, de préférence d'au moins 80 selon DIN 53505 et présente une résistance à la traction d'au moins 35 N/mm².

6. Couche sous-jacente de toiture selon la revendication 4, **caractérisée en ce qu'**en tant que polyuréthane thermoplastique, on utilise un polyester uréthane sensiblement linéaire ayant un indice de viscosité à l'état fondu MVI (190° C, 10 kg) de 15 à 23 cm³/10min. et un domaine de ramollissement de 60 à 70° C selon Kofler.

7. Couche sous-jacente de toiture selon l'une quelconque des revendications 4 à 6, **caractérisée en ce que** les nappes non tissées extérieures (11,13) sont réalisées en filaments continus de polyester ayant un poids superficiel de 30 à 120 g/m², les nappes intérieures en microfibres soufflées à l'état fondu à base de polyuréthane thermoplastique présentant un poids superficiel de 10 à 80 g/m².

8. Couche sous-jacente de toiture selon une quelconque des revendications 1, 2, 4 à 6 **caractérisée en ce que** les nappes non tissées extérieures (11,13) réalisées en filaments continus de polypropylène et la nappe non tissée intérieure est réalisée en microfibres de polyuréthane soufflées à l'état fondu.

9. Couche sous-jacente de toiture selon la revendication 2, **caractérisée en ce que** la nappe non tissée (11) présente du côté intérieur du toit présente un poids superficiel plus faible que la nappe non tissée (13) située du côté extérieur du toit.

10. Couche sous-jacente de toiture selon l'une quelconque des revendications 1 à 9, **caractérisée en ce qu'**à l'intérieur du stratifié (1), une couche de renforcement supplémentaire, comme un maillage, treillage ou tissu est voisine de l'une des faces de la nappe non tissée intérieure (12) en microfibres soufflées à l'état fondu.

11. Couche sous-jacente de toiture selon la revendication 1, **caractérisée en ce qu'**au voisinage de la nappe non tissée (12) en microfibres soufflées à l'état fondu, est réalisée une couche de renforcement, comme un maillage, treillage ou tissu à base de polypropylène en tant que couche intérieure du stratifié (1).

12. Couche sous-jacente de toiture selon la revendication 7, **caractérisée en ce qu'**au voisinage de la nappe non tissée intérieure (12) en microfibres soufflées à l'état fondu il est formé une couche de renforcement, comme un maillage, treillage ou tissu à base de polyester en tant que couche intérieure du stratifié (1).

13. Couche sous-jacente de toiture selon la revendication 11, **caractérisée en ce que** la couche de renforcement est munie d'un adhésif fondu à chaud, en particulier d'un copolymère éthylène-acétate de vinyle.

14. Couche sous-jacente de toiture selon une quelconque des revendications 1 à 13, **caractérisée en ce que** la nappe non tissée (11) du côté intérieur du toit en filaments continus est munie d'un gaufrage (14) du côté intérieur du toit.

15. Couche sous-jacente de toiture selon l'une quelconque des revendications 1 à 14 **caractérisée en ce que** la nappe non tissée (13) en filaments continus du côté extérieur du toit est renforcée sur sa surface par le passage par une emprise formée par des cylindres lisses.

16. Couche sous-jacente de toiture selon l'une quelconque des revendications 1, 2, 3, 11 ou 13, **caractérisée en ce que** toutes les couches du stratifié sont fabriquées à base de polypropylène et **en ce que** la couche intérieure de la couche de renforcement présente un poids superficiel de 20 à 120 g/m².

17. Couche sous-jacente de toiture selon l'une quelconque des revendications 1 à 16, **caractérisée en ce que** le stratifié présente une résistance élevée à la pluie battante et une imperméabilité à l'eau élevée.

18. Couche sous-jacente de toiture selon l'une quelconque des revendications 1 à 17, **caractérisée en ce que** la couche non tissée intérieure (12) en microfibres soufflées à l'état fondu est rendue hydrophobe à l'aide d'agents hydrofuges à base d'hydrocarbures fluorés comme des copolymères séquencés d'un perfluoroalkylacrylate ou hydrocarbure fluoré, comportant des groupes trifluorméthylsilyle à la place des groupes perfluoroalkyle.

19. Couche sous-jacente de toiture selon l'une quelconque des revendications 1 à 18, **caractérisée en ce qu'**elle présente une résistance à la traction d'au moins 120 N/5 cm, de préférence 150 N/5 cm.

20. Couche sous-jacente de toiture selon la revendication 1 **caractérisée en ce que** la nappe non tissée (12) intérieure en microfibres soufflées à l'état fondu, est réalisée à base de polypropylène et de copolymères éthylène-acétate de vinyle, le polypropylène représentant 90 à 99 % en poids et le copolymère éthylène-acétate de vinyle représentant 1 à 10 % en poids.

21. Couche sous-jacente de toiture selon l'une quelconque des revendications 1 à 20, **caractérisée en ce qu'**au moins l'une des couches de nappes non tissées (11, 12, 13) du stratifié est rendue ignifuge.

22. Couche sous-jacente de toiture selon la revendication 21, **caractérisée en ce qu'**en tant que moyen d'ignifugation, on utilise un polymère thermoplastique ou un adhésif fondu à chaud renfermant des particules de carbone et **en ce que** le traitement ignifugeant est appliqué en surface sur au moins une des nappes non tissées ou bien est contenu respectivement dans les microfibres soufflées à chaud ou filaments continus des nappes non tissées.

23. Couche sous-jacente de toiture selon la revendication 22 **caractérisée en ce qu'**en tant qu'adhésif pour les particules de carbone, on utilise un copolymère éthylène-acétate de vinyle.

24. Couche sous-jacente de toiture selon la revendication 21 ou 22, **caractérisée en ce que** la nappe non tissée intérieure (12) est rendue ignifuge.

25. Couche sous-jacente de toiture selon l'une quelconque des revendications 21 à 24 **caractérisée en ce que** l'adhésif renfermant des particules de carbone est utilisé à raison de 30 à 150 g/m², de préférence 60 à 120 g/m² par rapport au stratifié.

26. Procédé de fabrication d'une couche sous-jacente de toiture perméable par diffusion, qui est hydrophobe et/ou rendue hydrophobe et comporte un stratifié d'au moins trois couches de nappe non tissée à base de polymères thermoplastiques, dans laquelle sont fabriquées selon le procédé d'extrusion au moins les nappes non tissées extérieures principalement en filaments continus déposés en une bande de nappe non tissée et au moins une nappe non tissée intérieure est au moins principalement en microfibres soufflées à l'état fondu déposées en une bande de nappe non tissée et les bandes de non tissée sont ensuite réunies en un stratifié par le passage de l'ensemble dans l'emprise au moyen de contre-collage sous l'action de pression et de chaleur, une ou plusieurs des nappes non tissées étant le cas échéant seules ou en stratifié renforcées par gaufrage selon l'une quelconque des revendications 1 à 25, **caractérisé en ce qu'**au moins les surfaces de la nappe non tissée intérieure en microfibres soufflées à l'état fondu est partiellement fondue par traitement thermique avant l'opération de contre-collage et sont stratifiées avec les nappes non tissées extérieures par le passage dans une emprise allongée entre deux bandes de transport circulantes, des températures comprises entre le point de ramollissement et au maximum la température de fusion des microfibres soufflées à l'état fondu de la nappe non tissée intérieure et une pression de 5 à 30 KN/cm² étant appliquées sur le stratifié pendant son passage dans l'emprise pendant au moins 10 secondes, de sorte que les microfibres de la nappe non tissée intérieure forment un ensemble pelliculaire et que l'on obtienne des surfaces pelliculaires dont la taille de pores résiduels de la couche de non tissé intérieure est considérablement réduite par rapport à la taille de pores initiale.

27. Procédé selon la revendication 26, **caractérisé en ce que** l'on ajoute un agent ignifugeant à la matière première avant la fabrication des filaments continus et/ou les microfibres soufflées à l'état fondu et **en ce que** les filaments continus et/ou les microfibres soufflées à l'état fondu rendues ignifugées sont déposées avec les nappes non tissées formant les nappes non tissées extérieures ou intérieures du stratifié et sont ensuite contre-collées en un stratifié.

28. Procédé selon la revendication 26, **caractérisé en ce que** l'on saupoudre un agent ignifugeant sur au moins l'une des nappes non tissées du stratifié avant le contre-collage.

29. Procédé selon l'une quelconque des revendications 27 ou 28, **caractérisé en ce qu'**en tant qu'agent ignifugeant, on utilise un polymère thermoplastique ou un adhésif fondu à chaud renfermant des particules de carbone.

30. Procédé selon la revendication 29 **caractérisé en ce qu'**en tant qu'agent ignifugeant, on utilise un adhésif à base de copolymère éthylène-acétate de vinyle renfermant de 50 à 75 % en poids de carbone.

31. Procédé selon la revendication 29 ou 30, **caractérisé en ce que** l'agent ignifugeant est appliqué en une quantité de 30 à 150 g/m², de préférence 60 à 120 g/m² par rapport au stratifié.
